# FASCICULE DE BREVET EUROPEEN

(11) **EP 0 776 078 B1**
(45) Date de publication et mention de la délivrance du brevet: **15.03.2000**
(21) Numéro de dépôt: 96402480.6
(22) Date de dépôt: 19.11.1996
(51) Int. Cl.: H02G 3/06

(54) **Accessoire de dérivation pour profilé électrique, tel que goulotte, à disposer en bandeau**
Abzweigungszubehör für Elektroprofil, wie Wandkabelrinne
Derivation accessory for an electrical profile, such as a wall-mounted cable duct

(30) Priorité: 23.11.1995 FR 9513937
(43) Date de publication de la demande: 28.05.1997
(73) Titulaire: LEGRAND, F-87000 Limoges (FR); LEGRAND SNC, F-87000 Limoges (FR)
(72) Inventeur: Jadaud, Alain, 72140 Tennie (FR); Decore, Bertrand, 72650 La Chapelle Saint Aubin (FR)
(74) Mandataire: CABINET BONNET-THIRION

(56) Documents cités:
- EP-A- 0 267 079
- FR-A- 2 689 202

## Description

La présente invention concerne d'une manière générale les profilés électriques qui, tels les goulottes par exemple, sont à disposer en bandeau sur un quelconque support, en faisant saillie sur celui-ci.

Ces profilés électriques interviennent par exemple sur un mur, soit à la partie supérieure de ce mur, à leur raccordement avec le plafond, soit, en plinthe, à leur partie inférieure, soit, encore, à une hauteur intermédiaire.

La présente invention vise plus particulièrement le cas où, à partir d'un tel profilé électrique, ou profilé principal, il s'avère nécessaire d'établir une dérivation.

Cela peut par exemple être le cas pour assurer l'alimentation d'un appareillage disposé en pleine surface d'un mur ou du plafond, et cela peut également être le cas pour relier, dans un angle de pièce, une goulotte posée en plinthe à une autre goulotte formant un bandeau à la partie supérieure de cette pièce.

Il faut, à chaque fois, pour le logement et la protection des conducteurs électriques correspondants, établir, à partir du profilé principal, un autre profilé, ou profilé dérivé, qui, en pratique, s'étend sensiblement perpendiculairement au profilé principal.

Le problème, en l'espèce, est d'assurer un raccordement convenable entre le profilé dérivé et le profilé principal.

Or, plusieurs situations sont à considérer, suivant les implantations relatives de ce profilé principal et de ce profilé dérivé.

Tout d'abord, la dérivation correspondante peut intervenir en ligne droite, sans changement de plan, ce qui est le cas lorsque, comme le profilé principal, le profilé dérivé est implanté sur un mur, en T avec le profilé principal.

Mais tout en intervenant également en ligne droite, la dérivation peut également se faire avec un changement de plan, ce qui est le cas lorsque, au lieu d'être implanté sur le mur, le profilé dérivé est implanté sur le plafond, en équerre avec le profilé principal.

En variante, la dérivation peut intervenir en encoignure, le profilé dérivé se trouvant implanté à la jonction entre deux murs.

En outre, pour chacune de ces situations, la dérivation peut se faire avec une modification de section du profilé principal au profilé dérivé, en général une réduction de section, et cette réduction de section peut intervenir suivant des proportions variables d'une installation à une autre.

Il a déjà été proposé des accessoires de dérivation susceptibles de satisfaire à telle ou telle de ces situations.

Par exemple, les documents EP-A-0 267 079 et FR-A-2 689 202 décrivent de tels accessoires de dérivation pour profilés électriques.

Mais, à ce jour, ces accessoires de dérivation ne conviennent que pour une situation donnée, et pour une section de profilé dérivé donnée.

Pour que les installateurs puissent faire face à toutes les situations et/ou sections envisageables, il est donc nécessaire, dans ce cas, de mettre à leur disposition toute une gamme d'accessoires de dérivation de types différents, au prix de frais de fabrication et de gestion non négligeables pour l'ensemble.

Il a également été déjà proposé de mettre en oeuvre, pour l'établissement de dérivations, des boîtes dans les parois desquelles doivent être assurées des découpes pour leur adaptation aux profilés à raccorder.

Mais les boîtes de dérivation de ce type connues à ce jour ne permettent pas non plus de satisfaire à l'ensemble des situations et/ou sections envisageables.

Il résulte de ce qui précède que, fréquemment, les installateurs réalisent par eux-mêmes, au coup par coup, les dérivations à assurer, en procédant à une découpe appropriée des profilés concernés.

Mais, au détriment de la sécurité, le résultat obtenu est fortement dépendant de leur habilité, notamment en ce qui concerne la résistance à la pénétration des corps solides ou des liquides, et, en toute hypothèse, il est peu reproductible.

La présente invention a d'une manière générale pour objet un accessoire de dérivation qui, tout en facilitant le travail des installateurs, est avantageusement de nature à leur permettre de faire face à un ensemble de situations d'implantation et/ou de section du type de celles précédemment évoquées, et d'établir dans les meilleures conditions de sécurité et de reproductibilité les dérivations correspondantes.

Cet accessoire de dérivation est d'une manière générale caractérisé en ce qu'il comporte, d'une part, deux joues, qui sont formées chacune de deux bras en équerre, l'un frontal, l'autre latéral, et qui sont reliées l'une à l'autre par une poutre dans leur zone d'angle, et, d'autre part, deux panneaux de fermeture, l'un frontal, l'autre latéral, qui s'étendent chacun respectivement entre les deux bras des joues, et dont un au moins est affecté d'un réseau quadrillé de lignes de moindre résistance propres à permettre d'y découper, à la demande, le long de son bord libre opposé à la poutre, une encoche de contour quadrangulaire.

Par ses joues, l'accessoire de dérivation suivant l'invention intervient en saillie par rapport au profilé principal, soit à l'occasion d'une interruption locale de celui-ci, soit, éventuellement, sans rupture de continuité de ce profilé principal.

Par découpe de l'un de ses panneaux de fermeture, il se prête corollairement de manière simple à l'implantation du profilé dérivé.

Préférentiellement, l'un et l'autre des panneaux de fermeture sont ainsi affectés d'un réseau quadrillé de lignes de moindre résistance propres à leur découpe, et, pour faciliter les manipulations correspondantes, ils sont amovibles.

Lorsque les panneaux de fermeture sont ainsi amovibles, il est en outre avantageusement possible d'y réaliser une découpe de manière à masquer les lignes de coupe correspondantes, ou au moins une partie d'entre elles, dans les rainures dans lesquelles ces panneaux de fermeture sont alors en pratique engagés, en laissant à vue un bord de ces panneaux de fermeture obtenu par moulage, au bénéfice de l'esthétique de l'ensemble, voire même de sa résistance à la pénétration des corps solides.

Préférentiellement, également, pour faciliter une implantation en encoignure, l'une au moins des joues est amovible, et, des moyens d'emboîtement complémentaires étant alors prévus entre cette joue et l'extrémité correspondante de la poutre, il est associé, à la poutre, sous la forme d'une pièce distincte, un plot qui, doté de moyens d'emboîtement analogues à ceux de la joue, est susceptible d'être substitué à celle-ci, pour que, du côté de cette joue, alors manquante, l'ensemble puisse être encore convenablement assujetti à l'un ou l'autre des profilés.

Préférentiellement, enfin, l'accessoire de dérivation suivant l'invention comporte, également, une platine, destinée à se substituer au fond du profilé principal lorsque celui-ci est localement interrompu.

Cette platine, qui vient alors avantageusement reconstituer une certaine isolation par rapport au mur sous-jacent, comporte, par exemple, en saillie le long d'un de ses bords, qui est en pratique le bord opposé à la poutre, deux flasques définissant entre eux une rainure, et il lui est associé un panneau de fermeture complémentaire, qui est apte à être emboîté dans sa rainure, et qui comporte lui aussi au moins localement un réseau quadrillé de lignes de moindre résistance propres à permettre de le tronçonner en longueur et/ou en largeur.

Comme la platine, et avec l'ensemble des autres constituants de l'accessoire de dérivation suivant l'invention, ce panneau de fermeture complémentaire permet avantageusement de reconstituer tout autour de la dérivation concernée une enveloppe isolante de nature à favoriser la résistance de l'ensemble à toute pénétration de corps solides ou de liquides.

Les lignes de moindre résistance prévues dans les divers panneaux de fermeture, qui facilitent leur découpe et améliorent la netteté de celle-ci, favorisent avantageusement à cet égard une éventuelle réutilisation de leurs chutes de découpe.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un accessoire de dérivation suivant l'invention, en place à la jonction d'un profilé principal et d'un profilé dérivé, suivant une première situation d'implantation de ces profilés ;
la figure 2 est, à échelle supérieure, une vue en perspective en partie éclatée de cet accessoire de dérivation ;
la figure 3 est une vue en perspective plus éclatée des principaux constituants de cet accessoire de dérivation ;
la figure 4 est, à échelle supérieure, une vue en élévation, de face, d'une des joues qu'il comporte, suivant la flèche IV de la figure 3 ;
la figure 5 est une vue de côté de cette joue, suivant la flèche V de la figure 4 ;
la figure 6 en est une vue de l'arrière, suivant la flèche VI de la figure 5 ;
les figures 7, 8 et 9 en sont des vues en coupe transversale, suivant, chacune respectivement, les lignes VII-VII, VIII-VIII et IX-IX de la figure 6 ;
la figure 10 en est une vue partielle en coupe longitudinale, suivant la ligne X-X de la figure 6 ;
la figure 11 est une vue de dessous de la poutre que comporte également l'accessoire suivant l'invention, suivant la flèche XI de la figure 3 ;
la figure 12 est une vue partielle en coupe longitudinale de cette poutre, suivant la ligne XII-XII de la figure 11 ;
la figure 13 en est une vue de l'arrière, suivant la flèche XIII de la figure 11 ;
la figure 14 en est une vue en coupe transversale, suivant la ligne XIV-XIV de la figure 13 ;
la figure 15 est une vue en plan, de dessous, d'un des panneaux de fermeture que comporte également l'accessoire de dérivation suivant l'invention, suivant la flèche XV de la figure 3 ;
la figure 16 est une vue de côté de ce panneau de fermeture, suivant la flèche XVI de la figure 15 ;
la figure 17 en est une autre vue de côté, suivant la flèche XVII de la figure 15 ;
la figure 18 en est une vue partielle en coupe, suivant la ligne XVIII-XVIII la figure 15 ;
la figure 19 en est, à échelle supérieure, une autre vue partielle en coupe, suivant la ligne XIX-XIX de la figure 15 ;
la figure 20 est une vue en plan, de l'arrière, d'un autre des panneaux de fermeture que comporte l'accessoire de dérivation suivant l'invention, suivant la flèche XX de la figure 3 ;
la figure 21 est une vue de côté de cet autre panneau de fermeture, suivant la flèche XXI de la figure 20 ;
la figure 22 en est une autre vue de côté, suivant la flèche XXII de la figure 20 ;
la figure 23 en est, à échelle supérieure, une vue en coupe, suivant la ligne XXIII-XXIII de la figure 20 ;
la figure 24 est une vue en plan, de dessus, de la platine que comporte également l'accessoire de dérivation suivant l'invention, suivant la flèche XXIV de la figure 2 ;
la figure 25 est une vue en coupe de cette platine, suivant la ligne XXV-XXV de la figure 24 ;
la figure 26 en est une autre vue partielle en coupe, suivant la ligne XXVI-XXVI de la figure 24 ;
la figure 27 est une vue en plan, de l'avant, d'un panneau de fermeture complémentaire associé à la platine de l'accessoire de dérivation suivant l'invention, suivant la flèche XXVII de la figure 2 ;
la figure 28 est une vue de côté de ce panneau de fermeture complémentaire, suivant la flèche XXVIII de la figure 27 ;
la figure 29 en est une autre vue de côté, suivant la flèche XXIX de la figure 27 ;
la figure 30 est une vue en perspective qui, analogue à celle de la figure 1, se rapporte à une deuxième situation d'implantation pour le profilé principal et le profilé dérivé ;
la figure 31 est une vue en perspective qui, analogue, elle aussi, à celle de la figure 1, se rapporte à une troisième situation d'implantation pour ces deux profilés ;
la figure 32 est, avec un arrachement local, une vue en perspective se rapportant dans ce cas à une partie de l'accessoire de dérivation suivant l'invention ;
la figure 33 est, à échelle supérieure, et suivant la ligne XXXIII-XXXIII de la figure 32, une vue en coupe du pion alors mis en oeuvre ;
la figure 34 est une vue en perspective se rapportant à une variante de réalisation de l'accessoire de dérivation suivant l'invention.

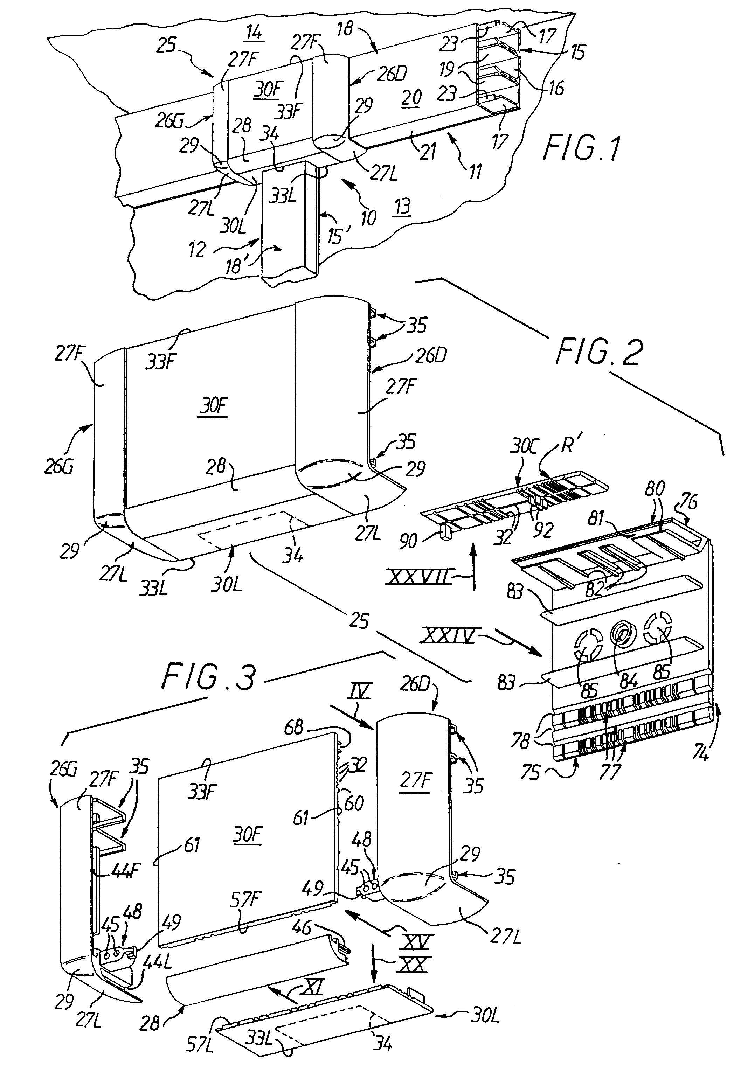

Tel qu'illustré sur ces figures, et ainsi qu'il est plus particulièrement visible sur les figures 1, 30 et 31, il s'agit, globalement, d'établir une dérivation 10 entre un profilé principal 11 et un profilé dérivé 12.

Ces profilés 11 et 12 sont des profilés électriques, c'est-à-dire des profilés destinés à assurer le logement et la protection de conducteurs électriques non représentés.

Dans les situations d'implantation représentées, le profilé principal 11 forme une goulotte établie en bandeau à la partie supérieure d'un mur 13, au raccordement de ce mur 13 avec le plafond 14.

Il comporte, suivant une section transversale globalement rectangulaire, d'une part, un corps 15, à semelle 16 et ailes latérales 17, et, d'autre part, un couvercle 18.

Plus précisément, dans la forme de réalisation représentée, le corps 15 comporte longitudinalement, entre ses ailes latérales 17, des cloisons internes 19, et le couvercle 18 est de type coiffant, dans la mesure où, outre un panneau de façade 20, il comporte des flancs latéraux 21 qui recouvrent sur toute leur hauteur les ailes latérales 17 du corps 15.

En outre, dans cette forme de réalisation, le couvercle 18 s'encliquète sur le corps 15.

A cet effet, les ailes latérales 17 de ce corps 15 forment, chacune, longitudinalement, le long de leur bord libre, un bourrelet 23, qui fait saillie vers l'extérieur, et sur lequel le couvercle 18 vient se crocheter.

Les dispositions correspondantes ne relevant pas de la présente invention, elles ne seront pas décrites plus en détail ici.

Le profilé dérivé 12 a une structure analogue à celle du profilé principal 11, à corps 15' et couvercle 18', et il ne sera pas non plus décrit plus en détail ici.

Par exemple, et tel que représenté, sa section transversale a une ampleur moindre que celle du profilé principal 11.

Dans la forme de mise en oeuvre plus particulièrement représentée sur la figure 1, le profilé dérivé 12 est implanté sur le mur 13, en saillie sur celui-ci, comme le profilé principal 11.

Il s'étend latéralement, en T, par rapport à ce profilé principal 11, sensiblement perpendiculairement à celui-ci.

Pour l'établissement de la dérivation 10, il est prévu un accessoire de dérivation 25.

Suivant l'invention, cet accessoire de dérivation 25 comporte, globalement, d'une part, deux joues 26D, 26G, l'une à droite, l'autre à gauche, qui sont formées chacune de deux bras 27F, 27L en équerre, l'un frontal, l'autre latéral, et qui sont reliées l'une à l'autre par une poutre 28 dans leur zone d'angle 29, et, d'autre part, deux panneaux de fermeture 30F, 30L, qui s'étendent chacun respectivement entre les deux bras 27F, 27L des joues 26D, 26G, et dont un au moins est affecté, suivant des dispositions décrites plus en détail ultérieurement, d'un réseau quadrillé R de lignes de moindre résistance 32 propres à permettre d'y découper, à la demande, le long de son bord libre 33F, 33L opposé à la poutre 28, une encoche 34 de contour quadrangulaire.

En pratique, les deux joues 26D, 26G ont une même constitution, et elles sont symétriques l'une de l'autre par rapport à un plan de symétrie qui, transversal par rapport à la poutre 28, passe par la zone médiane de celle-ci.

Dans les formes de réalisation représentées, elles ont, au moins extérieurement, un profil transversal bombé, le panneau de fermeture frontal 30F étant légèrement en surélévation par rapport au panneau de façade 20 du couvercle 18 du profilé principal 11, et le panneau de fermeture latéral 30L étant lui-même légèrement en avant du flanc latéral 21 correspondant de ce couvercle 18.

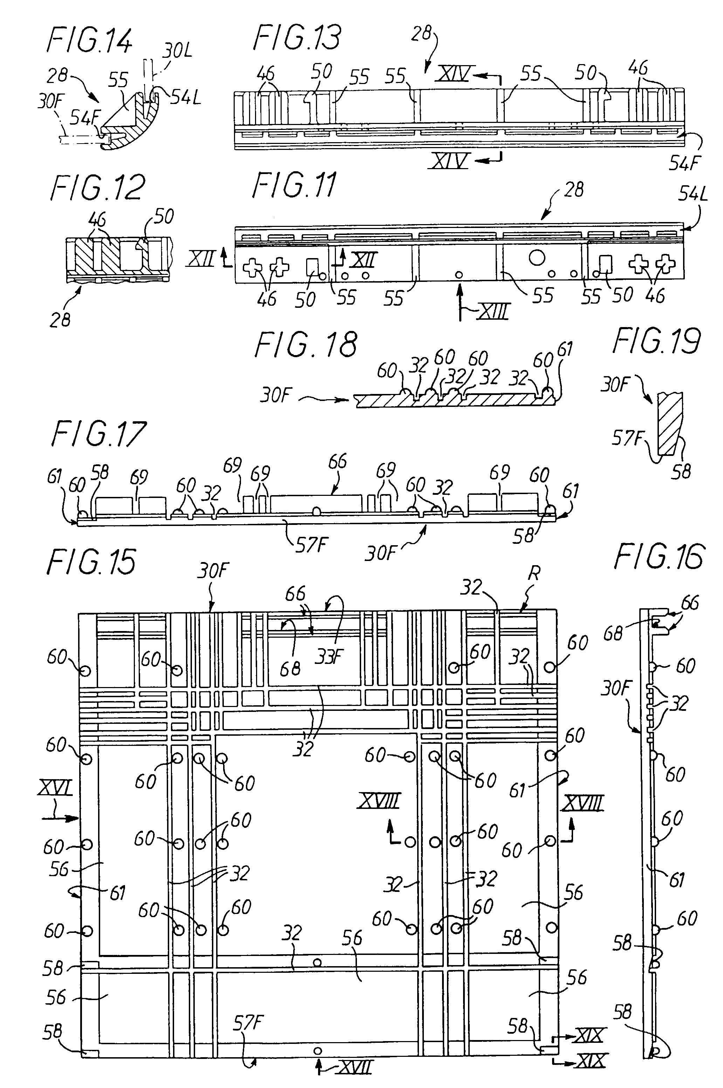

Dans la forme de réalisation plus particulièrement représentée sur les figures 1 à 33, l'une, au moins, des joues 26D, 26G est amovible, et, en pratique, il en est ainsi pour l'une et l'autre de celles-ci.

Pour leur assujettissement au profilé principal 11, le bras frontal 27F des joues 26D, 26G comporte, à chacune de ses extrémités, des moyens de crochetage 35, par lesquels il est apte à s'encliqueter sur le corps 15 de ce profilé principal 11, en venant en prise avec le bourrelet 23 des ailes latérales 17 de celui-ci, tel que schématisé en traits interrompus sur la figure 5.

Ces moyens de crochetage 35 comportent un flasque 36, qui s'étend transversalement par rapport au bras frontal 27F, et qui présente, au moins localement, à son extrémité, un retour en équerre 37 dirigé vers l'intérieur.

A distance du flasque 36, et parallèlement à celui-ci, s'étend un autre flasque 38, de moindre hauteur, pour contrebuter le bourrelet 23 correspondant, par la tranche libre de celui-ci.

Pour une adaptation à la hauteur et/ou à la largeur du profilé principal 11, l'un au moins des bras 27F, 27L des joues 26D, 26G comporte, à son extrémité libre, au moins une portion sécable 40F, 40L, et, en pratique, il en est ainsi pour l'un et l'autre de ces bras 27F, 27L.

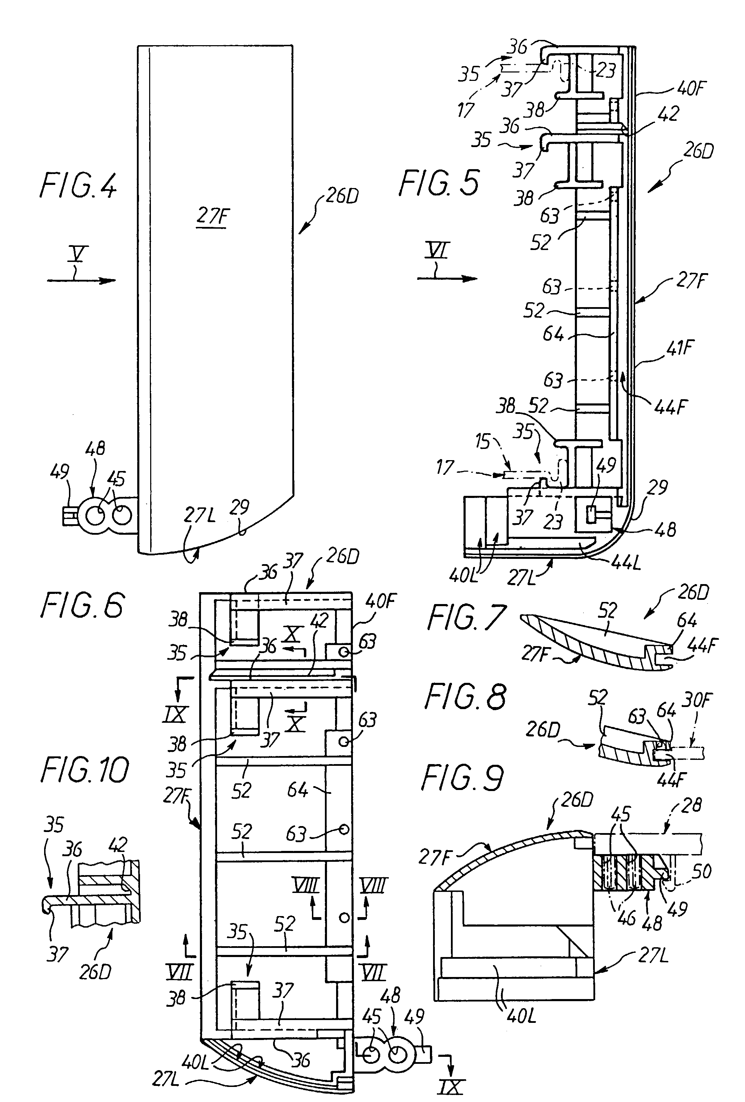

Pour le bras frontal 27F, seule une portion sécable 40F est prévue dans la forme de réalisation représentée, figures 5 et 6, et, à l'extrémité libre de ce bras frontal 27F, les moyens de crochetage 35 sont répétés, ces moyens de crochetage 35 étant prévus tant sur la portion intangible 41F de ce bras frontal 27F que sur sa portion sécable 40F.

En pratique, la portion sécable 40F se raccorde à la portion intangible 41F par une ligne de moindre résistance 42 matérialisée par une saignée affectant transversalement en creux la surface interne de l'ensemble.

Pour le bras latéral 27L, deux portions sécables 40L sont prévues dans la forme de réalisation représentée.

Elles affectent en gradins l'extrémité libre de ce bras latéral 27L, en présentant l'une et l'autre des épaisseurs successivement réduites.

Préférentiellement, et tel que représenté, l'un au moins des panneaux de fermeture 30F, 30L est amovible, et, en pratique, il en est ainsi pour l'un et l'autre de ces panneaux de fermeture 30F, 30L.

Pour l'emboîtement d'un tel panneau de fermeture 30F, 30L, l'un au moins des bras 27F, 27L des joues 26D, 26G, et, en pratique, chacun de ceux-ci, comporte une rainure 44F, 44L, le long de son bord interne, sur une portion au moins de la longueur de celui-ci.

Préférentiellement, et tel que représenté, cette rainure 44F, 44L débouche librement à son extrémité opposée à la poutre 28, pour permettre une mise en place par coulissement du panneau de fermeture 30F, 30L correspondant.

Pour l'assujettissement des joues 26D, 26G à la poutre 28, il est prévu, entre une telle joue 26D, 26G et l'extrémité correspondante de cette poutre 28, des moyens d'emboîtement complémentaires.

Ces moyens d'emboîtement comportent, sur une joue 26D, 26G, au moins un perçage 45, et, sur la poutre 28, au moins un ergot 46 complémentaire de ce perçage 45.

En pratique, le perçage 45 d'une joue 26D, 26G affecte un tenon 48 qui fait saillie dans la zone d'angle 29 de celle-ci.

En pratique, également, pour affermir l'emboîtement correspondant et éviter une rotation relative des joues 26D, 26G par rapport à la poutre 28, il y a, parallèlement l'un à l'autre, deux perçages 45 sur ces joues 26D, 26G, et, en correspondance, la poutre 28 comporte, à chacune de ses extrémités, deux ergots 46.

Préférentiellement, et tel que représenté, il est prévu, entre les joues 26D, 26G et la poutre 28, des moyens d'encliquetage complémentaires.

En pratique, dans la forme de réalisation représentée, ces moyens d'encliquetage comportent, sur les joues 26D, 26G, un cran 49, qui s'étend en bout de leur tenon 48, en saillie sur ce tenon 48, et à mi-hauteur de celui-ci, et, sur la poutre 28, une patte élastiquement déformable 50, qui, en forme de crochet, et tel que schématisé en traits interrompus sur la figure 9, est apte à venir en prise avec le cran 49 précédent.

Pour le reste, le bras frontal 27F des joues 26D, 26G présente transversalement, de place en place, en saillie sur sa surface interne, des nervures de raidissement 52.

Comme les joues 26D, 26G, la poutre 28 a, extérieurement, un profil transversal bombé, qui, en pratique, s'étend globalement en quart de cercle, et, le long de chacun de ses bords, elle comporte, sur une portion au moins de la longueur de ceux-ci, une rainure 54F, 54L, pour l'emboîtement des panneaux de fermeture 30F, 30L.

Comme les joues 26D, 26G, elle présente, transversalement, de place en place, en saillie sur sa surface interne, des nervures de raidissement 55.

Les ergots 46, et les pattes élastiquement déformables 50, s'étendent, parallèlement les uns les autres, à chacune de ses extrémités.

Dans la forme de réalisation représentée, les ergots 46 ont, en section transversale, un contour cruciforme.

Les panneaux de fermeture 30F, 30L ont l'un et l'autre un contour globalement quadrangulaire, et, dans les formes de réalisation représentées, ils sont l'un et l'autre affectés d'un réseau quadrillé R de lignes de moindre résistance 32.

En pratique, ces lignes de moindre résistance 32 s'étendent parallèlement à leurs côtés, et elles se trouvent matérialisées par des saignées affectant en creux leur surface interne.

Globalement, les lignes de moindre résistance 32 délimitent individuellement, deux à deux, trois par trois, ou quatre par quatre, des portions sécables 56.

Pour faciliter leur engagement dans les rainures 44F, 44L des joues 26D, 26G, les panneaux de fermeture 30F, 30L comportent, à chacune des extrémités de leur bord d'attaque 57F, 57L correspondant, c'est-à-dire de leur bord opposé à leur bord libre 33F, 33L, un chanfrein 58.

Pour le panneau de fermeture frontal 30F, qui a une ampleur supérieure à celle du panneau de fermeture latéral 30L, les chanfreins 58 se trouvent répétés en bordure de la ligne de moindre résistance 32 qui, parallèle au bord d'attaque 57F, est la plus proche de celui-ci.

A la faveur de la rainure 44F du bras frontal 27F des joues 26D, 26G, il est prévu, entre le panneau de fermeture frontal 30F et ce bras frontal 27F, des moyens d'encliquetage, pour affermir le maintien de ce panneau de fermeture frontal 30F une fois celui-ci en place.

Ces moyens d'encliquetage comportent, d'une part, pour le panneau de fermeture frontal 30F, des bossages 60, de profil globalement hémisphérique, prévus de place en place en saillie sur sa surface interne, le long de ses bords latéraux 61, et, d'autre part, pour le bras frontal 27F des joues 26D, 26G, des perçages 63 prévus, en correspondance, de place en place, sur la lèvre 64 la plus interne de la rainure 44F.

Pour le panneau de fermeture frontal 30F, les moyens d'encliquetage, et donc les bossages 60, sont répétés, ces moyens d'encliquetage étant prévus tant en bordure de ses bords latéraux 61 qu'en bordure des lignes de moindre résistance 32 parallèles à ceux-ci.

Le long de son bord libre 33F, c'est-à-dire le long de son bord opposé à la poutre 28, le panneau de fermeture frontal 30F comporte, au moins localement, en saillie sur sa surface interne, dans les formes de réalisation représentées, deux flasques 66 parallèles, qui définissent entre eux une rainure 68.

En pratique, ces flasques 66 sont localement interrompus, de place en place, au droit de certaines au moins des lignes de moindre résistance 32 parallèles au bords latéraux 61, et les échancrures 69 correspondantes sont plus ou moins étendues.

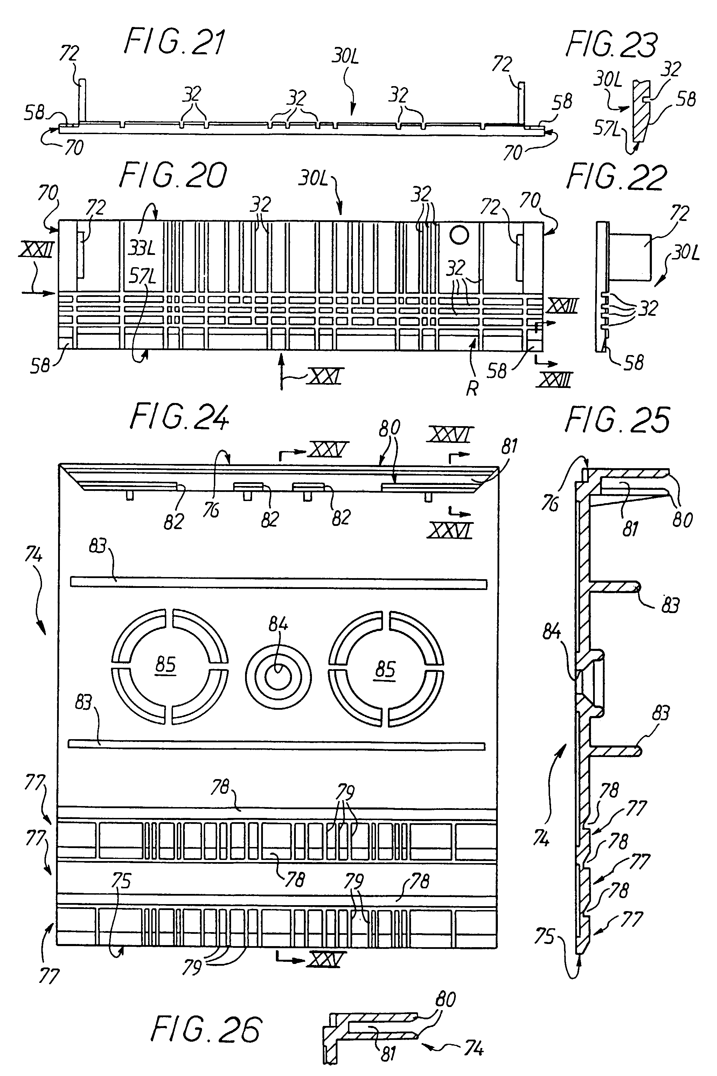

A proximité de chacun de ses bords latéraux 70, mais en retrait par rapport à ceux-ci, le panneau de fermeture latéral 30L, représenté isolément sur les figures 20, 21 et 22, comporte, lui, localement, en saillie sur sa surface interne, dans les formes de réalisation représentées, un flasque 72, qui, parallèle à un tel bord latéral 70, s'étend au moins sur une portion de la longueur de celui-ci.

Dans la forme de mise en oeuvre représentée sur la figure 1, il est prévu que, au droit de la dérivation 10, le profilé principal 11 soit localement interrompu.

L'accessoire de dérivation 25 suivant l'invention comporte, en outre, dans ce cas, une platine 74, de contour quadrangulaire, figures 24 et 25, propre à se substituer, localement, à la semelle 16 du corps 15 du profilé principal 11, pour reconstituer une enveloppe d'isolation à ce niveau.

Le long de son bord 75, cette platine 74 comporte, parallèlement à ce bord 75, au moins une portion sécable 77.

En pratique, dans la forme de réalisation représentée, trois portions sécables 77 parallèles les unes aux autres sont prévues, en étant chacune délimitées par une ligne de moindre résistance 78 matérialisée par une saignée affectant en creux la surface interne de l'ensemble, et certaines au moins d'entre elles sont elles-mêmes affectées, de place en place, transversalement, de lignes de moindre résistance 79 permettant leur découpe si désiré.

En pratique, il en est ainsi pour les deux portions sécables 77 extrêmes, la portion sécable 77 médiane s'étendant, elle, de manière continue.

Le long de son bord 76 opposé au bord 75, la platine 74 comporte, en saillie sur sa surface supérieure, deux flasques 80 parallèles, qui définissent entre eux une rainure 81.

En pratique, celui de ces flasques 80 qui est le plus interne est au moins localement fractionné, de place en place, par des échancrures 82 plus ou moins étendues.

Dans la forme de réalisation représentée, la platine 74 comporte, en outre, en saillie sur sa surface interne, dans sa zone médiane, parallèlement à ses portions sécables 77 et à ses flasques 80, et donc parallèlement à ses bords 75, 76, au moins une cloison 83.

En pratique, deux cloisons 83 sont prévues à distance l'une de l'autre.

Entre ces cloisons 83, la platine 74 comporte, d'une part, un perçage 84, pour sa fixation au mur 13 concerné, et, d'autre part, de part et d'autre de ce perçage 84, deux opercules défonçables 85, pour une éventuelle traversée par des conducteurs électriques.

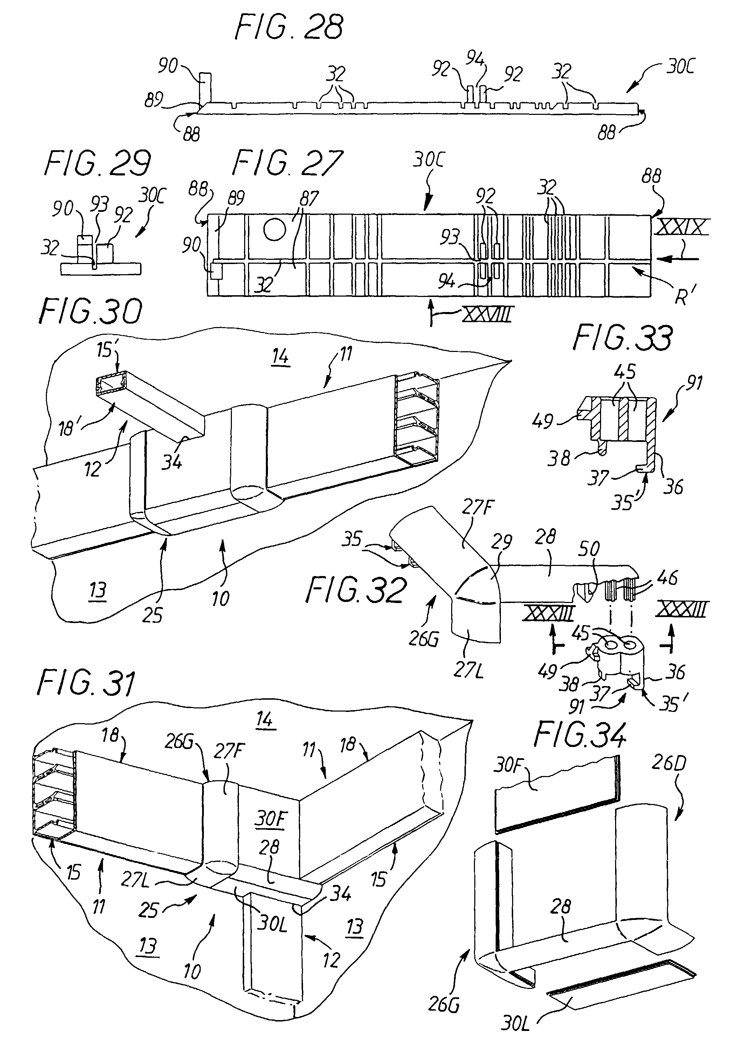

Enfin, il est associé à la platine 74, dans la forme de réalisation représentée, un panneau de fermeture complémentaire 30C, qui est représenté isolément sur les figures 27, 28 et 29, et qui est apte à être emboîté dans la rainure 81 de cette platine 74, aussi bien, d'ailleurs, que dans la rainure 68 du panneau de fermeture frontal 30F.

Comme les panneaux de fermeture 30F, 30L, ce panneau de fermeture complémentaire 30C comporte, au moins localement, un réseau R' de lignes de moindre résistance 32 matérialisées par des saignées affectant sa surface interne.

Mais, au lieu d'être quadrillé, ce réseau R' s'organise entre, d'une part, une ligne de moindre résistance 32 longitudinale, qui s'étend sensiblement suivant sa partie médiane, et, d'autre part, des lignes de moindre résistance 32 transversales, qui recoupent de place en place la précédente.

Le panneau de fermeture complémentaire 30C est ainsi apte à être tronçonné à la demande en longueur et/ou en largeur.

Globalement, les lignes de moindre résistance 32 y déterminent individuellement deux à deux, ou trois par trois, des portions sécables 87.

Le long d'un de ses bords latéraux 88, le panneau de fermeture complémentaire 30C comporte un chanfrein 89, et, en saillie sur sa surface interne, en bordure, conjointement, de sa ligne de moindre résistance 32 longitudinale, un pion 90 dont la largeur correspond à celle de la rainure 81 de la platine 74.

Le panneau de fermeture complémentaire 30C comporte, également, en saillie sur sa surface interne, entre ses bords latéraux 88, parallèlement à ces bords latéraux 88, mais à distance de l'un et de l'autre de ceux-ci, deux flasques 92 parallèles, qui, interrompus localement par une échancrure 93 au droit de la ligne de moindre résistance 32 longitudinale, définissent entre eux une rainure 94 de largeur sensiblement égale à l'épaisseur des cloisons 83 que porte en saillie la platine 74.

Au montage, il est d'abord procédé à la mise en place de la platine 74, après une découpe de son bord 75 de nature à permettre un engagement au moins partiel du profilé dérivé 12 à cet endroit.

Sans se retrouver nécessairement en correspondance avec les cloisons internes 19 du corps 15 du profilé principal 11, les cloisons 83 que comporte en saillie la platine 74 rétablissent alors peu ou prou une continuité entre ces cloisons internes 19.

Il est procédé, ensuite, à la mise en place du corps 15' du profilé dérivé 12, et à l'engagement dans celui-ci du ou des conducteurs électriques à dériver, avant de refermer l'ensemble par le couvercle 18' associé.

Si désiré, il est possible d'enrober au préalable d'une enveloppe isolante la partie alors coudée du ou des conducteurs électriques concernés.

Il est procédé, ensuite, à une découpe du panneau de fermeture latéral 30L de nature à former dans celui-ci l'encoche 34 nécessaire à son engagement sur le profilé dérivé 12.

Le panneau de fermeture latéral 30L ainsi découpé est mis en place entre les bras latéraux 27L des joues 26D, 26G préalablement rapportés sur la poutre 28, et le panneau de fermeture frontal 30F est lui-même mis en place entre les bras frontaux 27F de ces joues 26D, 26G.

Mais, avant que l'ensemble ainsi constitué soit rapporté sur le corps 15 du profilé principal 11, le panneau de fermeture complémentaire 30C est lui aussi mis en place dans la rainure 68 du panneau de fermeture frontal 30F, en sorte que, lors de la mise en place de l'ensemble, ce panneau de fermeture complémentaire 30C vient s'engager dans la rainure 81 de la platine 74.

Il est ainsi reconstitué, tout autour de la dérivation 10, une enveloppe d'isolation.

Par découpe à la faveur des lignes de moindre résistance prévues à cet effet, il est possible de procéder aux adaptations en hauteur et/ou en largeur nécessaires.

Dans tous les cas, la longueur, parallèlement au profilé principal 11, reste la même, et, toujours présents, les flasques 72 du panneau de fermeture latéral 30L s'opposent avantageusement à toute pénétration intempestive d'un quelconque corps solide à cet endroit, au bénéfice de la sécurité.

Dans tous les cas, également, le maintien de l'accessoire de dérivation 25 sur le profilé principal 11 se fait par encliquetage de ses joues 26D, 26G sur les ailes latérales 17 du corps 15 de celui-ci, à la faveur du bourrelet 23 de ces ailes latérales 17, et, si désiré, son démontage est possible.

Suivant la situation d'implantation illustrée par la figure 30, le profilé dérivé 12 est rapporté sur le plafond 14.

C'est alors dans le panneau de fermeture frontal 30F qu'est pratiquée l'encoche 34.

Mais, pour le reste, les dispositions sont les mêmes que les précédentes.

Toutefois, il est procédé à un tronçonnement du panneau de fermeture complémentaire 30C, pour le passage du profilé dérivé 12.

Suivant la situation d'implantation représentée sur la figure 31, l'accessoire de dérivation 25 suivant l'invention intervient en encoignure, le profilé dérivé 12 étant implanté sur un mur 13, à la jonction de celui-ci avec un autre mur 13.

Dans un tel cas, l'une des joues 26D, 26G est éliminée.

Il s'agit, par exemple, de la joue 26D de droite, comme représenté.

Quoi qu'il en soit, il est associé, dans un tel cas, à la poutre 28, sous la forme d'une pièce distincte, et tel que représenté sur la figure 32, un plot 91, qui, doté de moyens d'emboîtement analogues à ceux d'une joue 26D, 26G, et, donc, en l'espèce, de perçages 45, est ainsi susceptible d'être substitué à la joue 26D éliminée.

Corollairement, ce plot 91 comporte des moyens de crochetage 35', qui sont de même type que les moyens de crochetage 35 des joues 26D, 26G, et par lesquels il est apte à s'encliqueter sur le corps 15' du profilé dérivé 12.

Autrement dit, ces moyens de crochetage 35' comportent, comme les moyens de crochetage 35, un premier flasque 36 muni d'un retour en équerre 37, et, parallèlement à ce premier flasque 36, et à distance de celui-ci, un deuxième flasque 38.

De même, le plot 91 est également doté de moyens d'encliquetage analogues à ceux d'une joue 26D, 26G.

Il comporte donc un cran 49 pour coopérer avec la patte élastiquement déformable 50 correspondante de la poutre 28.

Ainsi, lorsqu'il intervient en encoignure, l'accessoire de dérivation 25 suivant l'invention est encliqueté, d'une part, par la seule joue 26G (ou 26D) qu'il comporte, sur le corps 15 du profilé principal 11, et, d'autre part, par le plot 91 substitué à l'autre de ces joues 26D, 26G, sur le corps 15' du profilé dérivé 12.

Bien entendu, plusieurs plots 91, de hauteurs différentes, sont prévus, pour une adaptation en hauteur à ce profilé dérivé 12 si nécessaire.

L'encoche 34 nécessaire au passage du profilé dérivé 12 est pratiquée dans le panneau de fermeture latéral 30L, et, pour une adaptation au changement d'orientation du profilé principal 11, le panneau de fermeture frontal 30F est lui-même l'objet d'une découpe qui en réduit la longueur.

Pour le reste, les dispositions sont du même type que les précédentes.

Dans la variante de réalisation représentée sur la figure 34, qui ne convient pas à un montage en encoignure, les joues 26D, 26G sont d'un seul tenant avec la poutre 28, l'ensemble formant de moulage une seule et même pièce.

Dans tous les cas, et ainsi qu'il est aisé de le comprendre, les lignes de moindre résistance prévues dans les divers panneaux de fermeture 30F, 30L, 30C permettent d'y pratiquer à la demande toutes les découpes nécessaires, et, le cas échéant, il est possible de tirer un parti judicieux des chutes de découpe correspondantes pour parfaire l'enveloppe isolante qui est reconstituée autour de la dérivation effectuée.

S'agissant, en particulier, du panneau de fermeture complémentaire 30C, il peut être rapporté, en tout ou partie, sur la platine 74, par exemple par engagement de son pion 90 dans la rainure 81 de celle-ci ou par engagement de ses flasques 92 autour d'une cloison 83 de cette platine 74.

Pour une dérivation en ligne droite avec changement de plan, il peut être rapporté sur le panneau de fermeture frontal 30F à la faveur de la rainure 68, comme précédemment décrit en référence aux figures 1 à 29, mais il est au préalable découpé transversalement pour permettre l'engagement du corps 15' du profilé dérivé 12.

Lors de l'utilisation de l'accessoire de dérivation 25 sans interruption du profilé principal 11, ce panneau de fermeture complémentaire 30C peut également, après découpe, être rapporté dans la rainure 68 du panneau de fermeture frontal 30 F ; il vient alors en contact avec le bord supérieur de l'aile latérale 17 du corps 15 du profilé principal 11.

Dans tous les cas, par ailleurs, les moyens d'encliquetage prévus entre les joues 26D, 26G et la poutre 28 ne viennent qu'en complément de leurs moyens d'emboîtement, à titre de perfectionnement.

En pratique, le verrouillage débrayable auquel ils conduisent présente surtout de l'intérêt lors de la dépose éventuelle du panneau de fermeture frontal 30F.

Bien entendu, la présente invention ne se limite pas aux formes de réalisation et/ou de mise oeuvre décrites et représentées, mais englobe toute variante d'exécution.

En particulier, le profilé principal peut, au moins dans certains cas, avoir une section transversale supérieure à celle du profilé dérivé.

## Revendications

1. Accessoire de dérivation pour profilé électrique, caractérisé en ce qu'il comporte, d'une part, deux joues (26D, 26G), qui sont formées chacune de deux bras (27F, 27L) en équerre, l'un frontal, l'autre latéral, et qui sont reliées l'une à l'autre par une poutre (28) dans leur zone d'angle (29), et, d'autre part, deux panneaux de fermeture (30F, 30L), l'un frontal, l'autre latéral, qui s'étendent chacun respectivement entre les deux bras (27F, 27L) des joues (26D, 26G), et dont un au moins est affecté d'un réseau quadrillé (R) de lignes de moindre résistance (32) propres à permettre d'y découper à la demande, le long de son bord libre (33F, 33L) opposé à la poutre (28), une encoche (34) de contour quadrangulaire.

2. Accessoire de dérivation suivant la revendication 1, caractérisé en ce que, à son extrémité libre, l'un au moins des bras (27F, 27L) d'une joue (26D, 26G) comporte au moins une portion sécable (40F, 40L).

3. Accessoire de dérivation suivant l'une quelconque des revendications 1, 2, caractérisé en ce que le bras frontal (27F) des joues (26D, 26G) comporte, à chacune de ses extrémités, des moyens de crochetage (35), par lesquels il est apte à s'encliqueter sur le corps (15) du profilé principal (11).

4. Accessoire de dérivation suivant les revendications 2 et 3, prises conjointement, caractérisé en ce que, à l'extrémité libre du bras frontal (27F), les moyens de crochetage (35) sont répétés, ces moyens de crochetage (35) étant prévus tant sur la portion intangible (41F) de ce bras frontal (27F) que sur sa portion sécable (40F).

5. Accessoire de dérivation suivant l'une quelconque des revendications 2 à 4, caractérisé en ce que les moyens de crochetage (35) comportent un flasque (36), qui s'étend transversalement par rapport au bras frontal (27F), et qui présente, au moins localement, un retour en équerre (37).

6. Accessoire de dérivation suivant la revendication 5, caractérisé en ce que, à distance du flasque (36) que comportent les moyens de crochetage (35), et parallèlement à ce flasque (36), s'étend un autre flasque (38).

7. Accessoire de dérivation suivant l'une quelconque des revendications 1 à 6, caractérisé en ce que l'un au moins des panneaux de fermeture (30F, 30L) est amovible.

8. Accessoire de dérivation suivant la revendication 7, caractérisé en ce que l'un et l'autre des panneaux de fermeture (30F, 30L) sont amovibles.

9. Accessoire de dérivation suivant l'une quelconque des revendications 7, 8, caractérisé en ce que, pour l'emboîtement d'un panneau de fermeture (30F, 30L), l'un au moins des bras (27F, 27L) d'une joue (26D, 26G) comporte une rainure (44F, 44L) le long de son bord interne, sur une portion au moins de la longueur de celui-ci.

10. Accessoire de dérivation suivant la revendication 9, caractérisé en ce que la rainure (44F, 44L) débouche librement à son extrémité opposée à la poutre (28).

11. Accessoire de dérivation suivant l'une quelconque des revendications 9, 10, caractérisé en ce que, à la faveur de la rainure (44F), il est prévu des moyens d'encliquetage (60, 63) entre le panneau de fermeture frontal (30F) et le bras frontal (27F) des joues (26D, 26G).

12. Accessoire de dérivation suivant la revendication 11, caractérisé en ce que, pour le panneau de fermeture frontal (30F), les moyens d'encliquetage (60) sont répétés, ces moyens d'encliquetage (60) étant prévus tant en bordure de ses bords latéraux (61) qu'en bordure de lignes de moindre résistance (32) parallèles à ceux-ci.

13. Accessoire de dérivation suivant l'une quelconque des revendications 1 à 12, caractérisé en ce que, le long de son bord libre (33F) opposé à la poutre (28), le panneau de fermeture frontal (30F) comporte, au moins localement, en saillie sur sa surface interne, deux flasques (66) parallèles, qui définissent entre eux une rainure (68).

14. Accessoire de dérivation suivant la revendication 13, caractérisé en ce que les flasques (66) sont localement interrompus, de place en place, au droit de certaines au moins des lignes de moindre résistance (32).

15. Accessoire de dérivation suivant l'une quelconque des revendications 1 à 14, caractérisé en ce que, à proximité de chacun de ses bords latéraux (70), et en retrait par rapport à ceux-ci, le panneau de fermeture latéral (30L) comporte, localement, en saillie sur sa surface interne, un flasque (72), qui, parallèle à un tel bord latéral (70), s'étend sur une portion au moins de la longueur de celui-ci.

16. Accessoire de dérivation suivant l'une quelconque des revendications 1 à 15, caractérisé en ce que l'un et l'autre des panneaux de fermeture (30F, 30L) sont affectés d'un réseau quadrillé (R) de lignes de moindre résistance (32) propres à permettre d'y découper à la demande, le long du bord libre (33F, 33L) opposé à la poutre (28), une encoche (34) de contour quadrangulaire.

17. Accessoire de dérivation suivant l'une quelconque des revendications 1 à 16, caractérisé en ce que l'une au moins des joues (26D, 26G) est amovible, et il est prévu, entre cette joue (26D, 26G) et l'extrémité correspondante de la poutre (28), des moyens d'emboîtement (45, 46) complémentaires.

18. Accessoire de dérivation suivant la revendication 17, caractérisé en ce que les moyens d'emboîtement (45, 46) comportent, sur la joue (26D, 26G), au moins un perçage (45), et, sur la poutre (28), au moins un ergot (46) complémentaire du perçage (45).

19. Accessoire de dérivation suivant la revendication 18, caractérisé en ce que le perçage (45) d'une joue (26D, 26G) affecte un tenon (48) qui fait saillie dans sa zone d'angle (29).

20. Accessoire de dérivation suivant l'une quelconque des revendications 18, 19, caractérisé en ce qu'il y a, parallèlement l'un à l'autre, deux perçages (45) sur une joue (26D, 26G), et, en correspondance, la poutre (28) comporte deux ergots (46) à chacune de ses extrémités.

21. Accessoire de dérivation suivant l'une quelconque des revendications 17 à 20, caractérisé en ce qu'il est prévu, entre une joue (26D, 26G) amovible et la poutre (28), des moyens d'encliquetage (49, 50) complémentaires.

22. Accessoire de dérivation suivant l'une quelconque des revendications 17 à 21, caractérisé en ce qu'il est associé, à la poutre (28), sous la forme d'une pièce distincte, un plot (91), qui dotée de moyens d'emboîtement (45) analogues à ceux d'une joue (26D, 26G), est susceptible d'être substitué à celle-ci, et qui comporte corollairement des moyens de crochetage (35') par lesquels il est apte à s'encliqueter sur le corps (15') du profilé dérivé (12).

23. Accessoire de dérivation suivant les revendications 3 et 22, prises conjointement, caractérisé en ce que les moyens de crochetage (35') du plot (91) sont de même type que ceux d'une joue (26D, 26G).

24. Accessoire de dérivation suivant les revendications 21 et 22, prises conjointement, caractérisé en ce que le plot (91) est également doté de moyens d'encliquetage (49) analogues à ceux d'une joue (26D, 26G) amovible.

25. Accessoire de dérivation suivant l'une quelconque des revendications 17 à 24, caractérisé en ce que l'une et l'autre des joues (26D, 26G) sont amovibles.

26. Accessoire de dérivation suivant l'une quelconque des revendications 7, 8, caractérisé en ce que, pour l'emboîtement d'un panneau de fermeture (30F, 30L), la poutre (28) comporte une rainure (54F, 54L) le long de son bord correspondant, sur une portion au moins de la longueur de celui-ci.

27. Accessoire de dérivation suivant l'une quelconque des revendications 1 à 26, caractérisé en ce qu'il comporte, en outre, une platine (74), de contour quadrangulaire, qui, le long de son bord (75), comporte, parallèlement à ce bord (75), au moins une portion sécable (77), et qui, le long de son bord (76) opposé au bord (75), comporte, en saillie, deux flasques (80) définissant entre eux une rainure (81).

28. Accessoire de dérivation suivant la revendication 27, caractérisé en ce que celui des flasques (80) qui est le plus interne est au moins localement fractionné.

29. Accessoire de dérivation suivant l'une quelconque des revendications 26, 27, caractérisé en ce que la platine (74) comporte, en saillie, dans sa zone médiane, parallèlement à ses portions sécables (77) et à ses flasques (80), au moins une cloison (83).

30. Accessoire de dérivation suivant l'une quelconque des revendications 26 à 29, caractérisé en ce qu'il est associé à la platine (74) un panneau de fermeture complémentaire (30C), qui est apte à être emboîté dans sa rainure (81), et qui comporte, au moins localement, un réseau (R') de lignes de moindre résistance (32) propres à permettre de le tronçonner en longueur et/ou en largeur.

31. Accessoire de dérivation suivant la revendication 30, caractérisé en ce que le panneau de fermeture complémentaire (30C) comporte en saillie un pion (90).

32. Accessoire de dérivation suivant l'une quelconque des revendications 30, 31, caractérisé en ce que le panneau de fermeture complémentaire (30C) comporte en saillie, parallèlement à ses bords latéraux (88), et à distance de l'un et l'autre de ceux-ci, deux flasques (92) définissant entre eux une rainure (94).

## Patentansprüche

1. Abzweigungszubehör für Elektroprofil, dadurch gekennzeichnet, daß es einerseits zwei Wangen (26D, 26G) aufweist, die jeweils von zwei in einem Winkel angeordneten Armen (27F, 27L), und zwar einem Frontarm und einem Seitenarm, gebildet sind und die in ihrem Winkelbereich (29) durch einen Träger (28) miteinander verbunden sind, und andererseits zwei Verschlußplatten (30F, 30L), und zwar eine Frontverschlußplatte und eine Seitenverschlußplatte, die sich jeweils zwischen den beiden Armen (27F, 27L) der Wangen (26D, 26G) erstrecken und von denen mindestens eine mit einem quadratischen Netz (R) von Linien (32) geringerer Festigkeit versehen ist, die es ermöglichen, in ihr nach Wunsch längs ihres dem Träger (28) entgegengesetzten freien Randes (33F, 33L) einen Ausschnitt (34) mit rechteckigem Umriß auszuschneiden.

2. Abzweigungszubehör nach Anspruch 1, dadurch gekennzeichnet, daß mindestens einer der Arme (27F, 27L) einer Wange (26D, 26G) an seinem freien Ende mindestens einen abtrennbaren Teil (40F, 40L) aufweist.

3. Abzweigungszubehör nach einem der Ansprüche 1, 2, dadurch gekennzeichnet, daß der Frontarm (27F) der Wangen (26D, 26G) an jedem seiner Enden Einhakmittel (35) aufweist, mit denen er an dem Körper (15) des Hauptprofils (11) eingerastet werden kann.

4. Abzweigungszubehör nach den Ansprüchen 2 und 3 zusammen, dadurch gekennzeichnet, daß die Einhakmittel (35) am freien Ende des Frontarms (27F) mehrfach vorgesehen sind, wobei diese Einhakmittel (35) sowohl auf dem nichtabtrennbaren Teil (41F) dieses Frontarms (27F) als auch auf seinem abtrennbaren Teil (40F) vorgesehen sind.

5. Abzweigungszubehör nach einem der Ansprüche 2 bis 4, dadurch gekennzeichnet, daß die Einhakmittel (35) eine Wand (36) aufweisen, die sich quer zum Frontarm (27F) erstreckt und die mindestens örtlich eine Abwinklung (37) aufweist.

6. Abzweigungszubehör nach Anspruch 5, dadurch gekennzeichnet, daß sich in einem Abstand von der die Einhakmittel (35) aufweisenden Wand (36) und parallel zu dieser Wand (36) eine weitere Wand (38) erstreckt.

7. Abzweigungszubehör nach einem der Ansprüche 1 bis 6, dadurch gekennzeichnet, daß mindestens eine der Verschlußplatten (30F, 30L) abnehmbar ist.

8. Abzweigungszubehör nach Anspruch 7, dadurch gekennzeichnet, daß beide Verschlußplatten (30F, 30L) abnehmbar sind.

9. Abzweigungszubehör nach einem der Ansprüche 7, 8, dadurch gekennzeichnet, daß mindestens einer der Arme (27F, 27L) einer Wange (26D, 26G) zum Einstecken einer Verschlußplatte (30F, 30L) längs seines inneren Randes mindestens auf einem Teil dessen Länge eine Nut (44F, 44L) aufweist.

10. Abzweigungszubehör nach Anspruch 9, dadurch gekennzeichnet, daß die Nut (44F, 44L) an ihrem dem Träger (28) entgegengesetzten Ende frei ausmündet.

11. Abzweigungszubehör nach einem der Ansprüche 9, 10, dadurch gekennzeichnet, daß in der Nut (44F) zwischen der Frontverschlußplatte (30F) und dem Frontarm (27F) der Wangen (26D, 26G) Einrastmittel (60, 63) vorgesehen sind.

12. Abzweigungszubehör nach Anspruch 11, dadurch gekennzeichnet, daß die Einrastmittel (60) auf der Frontverschlußplatte (30F) mehrfach vorgesehen sind, wobei diese Einrastmittel (60) sowohl längs ihrer Seitenränder (61) als auch längs der zu diesen parallelen Linien (32) geringerer Festigkeit vorgesehen sind.

13. Abzweigungszubehör nach einem der Ansprüche 1 bis 12, dadurch gekennzeichnet, daß die Frontverschlußplatte (30F) längs ihres dem Träger (28) entgegengesetzten freien Randes (33F) mindestens örtlich auf ihrer Innenseite vorstehend zwei parallele Wände (66) aufweist, die miteinander eine Nut (68) abgrenzen.

14. Abzweigungszubehör nach Anspruch 13, dadurch gekennzeichnet, daß die Wände (66) örtlich stellenweise auf Höhe mindestens mancher Linien (32) geringerer Festigkeit unterbrochen sind.

15. Abzweigungszubehör nach einem der Ansprüche 1 bis 14, dadurch gekennzeichnet, daß die Seitenverschlußplatte (30L) in Nähe jedes ihrer Seitenränder (70) und bezüglich dieser zurückversetzt örtlich auf ihrer Innenseite vorstehend eine Wand (72) aufweist, die zu einem solchen Seitenrand (70) parallel ist und sich auf mindestens einem Teil seiner Länge erstreckt.

16. Abzweigungszubehör nach einem der Ansprüche 1 bis 15, dadurch gekennzeichnet, daß beide Verschlußplatten (30F, 30L) mit einem quadratischen Netz (R) von Linien (32) geringerer Festigkeit versehen sind, die es gestatten, in ihnen nach Wunsch längs des dem Träger (28) entgegengesetzten freien Randes (33F, 33L) einen Ausschnitt (34) mit rechtekkigem Umriß auszuschneiden.

17. Abzweigungszubehör nach einem der Ansprüche 1 bis 16, dadurch gekennzeichnet, daß mindestens eine der Wangen (26D, 26G) abnehmbar ist und daß zwischen dieser Wange (26D, 26G) und dem entsprechenden Ende des Trägers (28) einander ergänzende Einsteckmittel (45, 46) vorgesehen sind.

18. Abzweigungszubehör nach Anspruch 17, dadurch gekennzeichnet, daß die Einsteckmittel (45, 46) auf der Wange (26D, 26G) mindestens eine Bohrung (45) und auf dem Träger (28) mindestens einen die Bohrung (45) ergänzenden Stift (46) aufweisen.

19. Abzweigungszubehör nach Anspruch 18, dadurch gekennzeichnet, daß die Bohrung (45) einer Wange (26D, 26G) in einem Fuß (48) vorgesehen ist, der in deren Winkelbereich (29) vorsteht.

20. Abzweigungszubehör nach einem der Ansprüche 18, 19, dadurch gekennzeichnet, daß parallel zueinander zwei Bohrungen (45) auf einer Wange (26D, 26G) vorgesehen sind und daß der Träger (28) entsprechend zwei Stifte (46) an jedem seiner Enden aufweist.

21. Abzweigungszubehör nach einem der Ansprüche 17 bis 20, dadurch gekennzeichnet, daß zwischen einer abnehmbaren Wange (26D, 26G) und dem Träger (28) einander ergänzende Einrastmittel (49, 50) vorgesehen sind.

22. Abzweigungszubehör nach einem der Ansprüche 17 bis 21, dadurch gekennzeichnet, daß dem Träger (28) in Form eines getrennten Teils ein Klotz (91) zugeordnet ist, der mit Einsteckmitteln (45) ähnlich denen einer Wange (26D, 26G) versehen ist, diese ersetzen kann und gleichzeitig Einhakmittel (35') aufweist, mit denen er am Körper (15') des Abzweigprofils (12) eingerastet werden kann.

23. Abzweigungszubehör nach den Ansprüchen 3 und 22 zusammen, dadurch gekennzeichnet, daß die Einhakmittel (35') des Klotzes (91) vom selben Typ wie die einer Wange (26D, 26G) sind.

24. Abzweigungszubehör nach den Ansprüchen 21 und 22 zusammen, dadurch gekennzeichnet, daß der Klotz (91) ebenfalls mit Einrastmitteln (49) ähnlich denen einer abnehmbaren Wange (26D, 26G) versehen ist.

25. Abzweigungszubehör nach einem der Ansprüche 17 bis 24, dadurch gekennzeichnet, daß beide Wangen (26D, 26G) abnehmbar sind.

26. Abzweigungszubehör nach einem der Ansprüche 7, 8, dadurch gekennzeichnet, daß der Träger (28) für das Einstekken einer Verschlußplatte (30F, 30L) längs seines entsprechenden Randes auf mindestens einem Teil dessen Länge eine Nut (54F, 54L) aufweist.

27. Abzweigungszubehör nach einem der Ansprüche 1 bis 26, dadurch gekennzeichnet, daß es außerdem eine Platine (74) mit quadratischem Umriß aufweist, die längs ihres Randes (75) parallel zu diesem Rand (75) mindestens einen abtrennbaren Teil (77) aufweist und die längs ihres dem Rand (75) entgegengesetzten Randes (76) vorstehend zwei Wände (80) aufweist, die miteinander eine Nut (81) abgrenzen.

28. Abzweigungszubehör nach Anspruch 27, dadurch gekennzeichnet, daß die innere der Wände (80) mindestens örtlich fraktioniert ist.

29. Abzweigungszubehör nach einem der Ansprüche 26, 27, dadurch gekennzeichnet, daß die Platine (74) vorstehend in ihrem mittleren Bereich parallel zu ihren abtrennbaren Teilen (77) und zu ihren Wänden (80) mindestens eine Zwischenwand (83) aufweist.

30. Abzweigungszubehör nach einem der Ansprüche 26 bis 29, dadurch gekennzeichnet, daß der Platine (74) eine ergänzende Verschlußplatte (30C) zugeordnet ist, die in ihre Nut (81) eingesteckt werden kann und mindestens örtlich ein Netz (R') von Linien (32) geringerer Festigkeit besitzt, die es ermöglichen, sie in der Länge und/oder in der Breite zu zerteilen.

31. Abzweigungszubehör nach Anspruch 30, dadurch gekennzeichnet, daß die ergänzende Verschlußplatte (30C) vorstehend einen Zapfen (90) aufweist.

32. Abzweigungszubehör nach einem der Ansprüche 30, 31, dadurch gekennzeichnet, daß die ergänzende Verschlußplatte (30C) parallel zu ihren Seitenrändern (88) und in einem Abstand von beiden dieser Ränder vorstehend zwei Wände (92) aufweist, die miteinander eine Nut (94) bilden.

## Claims

1. A branching accessory for an electrical profile member, characterised in that it comprises on the one hand two side portions (260, 26G) which are each formed by two arms (27F, 27L) in right-angled relationship, one being a front arm and the other being a side arm, and which are connected together by a beam (28) in their angle zone (29),and on the other hand, two closure panels (30F, 30L), one being a front panel and the other being a side panel, which each extend respectively between the two arms (27F, 27L) of the side portions (26D, 26G) and of which one at least involves a squared grid (R) of lines (32) of lower strength for permitting an opening (34) of quadrangular contour to be cut out therein as required along its free edge (33F, 33L) which is opposite to the beam (28).

2. A branching accessory according to claim 1 characterised in that, at its free end, one at least of the arms (27F, 27L) of a side portion (26D, 26G) comprises at least one cuttable portion (40F, 40L).

3. A branching accessory according to either one of claims 1 and 2 characterised in that the front arm (27F) of the side portions (26D, 26G) comprises at each of its ends hooking means (35) by which it is capable of latching on to the body (15) of the main profile member (11).

4. A branching accessory according to claims 2 and 3 in combination characterised in that at the free end of the front arm (27F), the hooking means (35) are repeated, said hooking means (35) being provided both on the intangible portion (41F) of said front arm (27F) and on its cuttable portion (40F).

5. A branching accessory according to any one of claims 2 to 4 characterised in that the hooking means (35) comprise a flange (36) which extends transversely with respect to the front arm (27F) and which at least locally has a right-angled return portion (37).

6. A branching accessory according to claim 5 characterised in that extending at a spacing from the flange (36) that the hooking means (35) comprise, and in parallel relationship with said flange (36), is another flange (38).

7. A branching accessory according to any one of claims 1 to 6 characterised in that one at least of the closure panels (30F, 30L) is removable.

8. A branching accessory according to claim 7 characterised in that both of the closure panels (30F, 30L) are removable.

9. A branching accessory according to either one of claims 7 and 8 characterised in that, for engagement of a closure panel (30F, 30L), one at least of the arms (27F, 27L) of a side portion (26D, 26G) comprises a groove (44F, 44L) along its internal edge, over a portion at least of the length thereof.

10. A branching accessory according to claim 9 characterised in that the groove (44F, 44L) opens freely at its end opposite to the beam (28).

11. A branching accessory according to either one of claims 9 and 10 characterised in that by virtue of the groove (44) there are provided latching means (60, 63) operative between the front closure panel (30F) and the front arm (27F) of the side portions (26D, 26G).

12. A branching accessory according to claim 11 characterised in that, for the front closure panel (30F), the latching means (60) are repeated, said latching means (60) being provided both along the side edges (61) thereof and along lines (32) of lower strength which are parallel to them.

13. A branching accessory according to any one of claims 1 to 12 characterised in that, along its free edge (33F) opposite to the beam (28), the front closure panel (30F) at least locally comprises in projecting relationship on its internal surface two parallel flanges (66) which define between them a groove (68).

14. A branching accessory according to claim 13 characterised in that the flanges (66) are locally interrupted at spaced locations in line with some at least of the lines (32) of lower strength.

15. A branching accessory according to any one of claims 1 to 14 characterised in that, in the proximity of each of its side edges (70) and in set-back relationship with respect to the latter, the lateral closure panel (30L) locally comprises in projecting relationship on its internal surface a flange (72) which, parallel to such a lateral edge (70), extends over a portion at least of the length thereof.

16. A branching accessory according to any one of claims 1 to 15 characterised in that both of the closure panels (30F, 30L) involve a squared grid (R) of lines (32) of lower strength for permitting an opening (34) of quadrangular contour to be cut out therein as required along its free edge (33F, 33L) which is opposite to the beam (28).

17. A branching accessory according to any one of claims 1 to 16 characterised in that one at least of the side portions (26D, 26G) is removable and provided between said side portions (26D, 26G) and the corresponding end of the beam (28) are complementary engagement means (45, 46).

18. A branching accessory according to claim 17 characterised in that the engagement means (45, 46) comprise on the side portion (26D, 26G) at least one aperture (45) and on the beam (28) at least one projection (46) which is complementary to the aperture (45).

19. A branching accessory according to claim 18 characterised in that the aperture (45) of a side portion (260, 26G) involves a protrusion (48) which projects in its angle zone (29).

20. A branching accessory according to either one of claims 18 and 19 characterised in that in parallel relationship to each other there are two apertures (45) on a side portion (26D, 26G) and in corresponding relationship the beam (28) comprises two projections (46) at each of its ends.

21. A branching accessory according to any one of claims 17 to 20 characterised in that provided between a removable side portion (26D, 26G) and the beam (28) are complementary latching means (49, 50).

22. A branching accessory according to any one of claims 17 to 21 characterised in that associated with the beam (28) in the form of a separate part is a stud (91) which, provided with engagement means (45) similar to those of a side portion (26D, 26G), is capable of being substituted for same, and which as a corollary comprises hooking means (35') by means of which it is capable of latching on to the body (15') of the branched profile member (12).

23. A branching accessory according to claims 3 and 22 in combination characterised in that the hooking means (35') of the stud (91) are of the same type as those of a side portion (26D, 26G).

24. A branching accessory according to claims 21 and 22 in combination characterised in that the stud (91) is also provided with latching means (49) similar to those of a removable side portion (26D, 26G).

25. A branching accessory according to any one of claims 17 to 24 characterised in that both of the side portions (26D, 26G) are removable.

26. A branching accessory according to either one of claims 7 and 8 characterised in that, for engagement of a closure panel (30F, 30L), the beam (28) comprises a groove (54F, 54L) along its corresponding edge over a portion at least of the length thereof.

27. A branching accessory according to any one of claims 1 to 26 characterised in that it further comprises a plate portion (74) of quadrangular contour which along its edge (75) comprises parallel to said edge (75) at least one cuttable portion (77) and which along its edge (76) opposite to the edge (75) comprises in projecting relationship two flanges (80) defining a groove (81) between them.

28. A branching accessory according to claim 27 characterised in that that one of the flanges (80) which is most inward is at least locally divided up.

29. A branching accessory according to either one of claims 26 and 27 characterised in that the plate portion (74) comprises in projecting relationship in its central zone and parallel to its cuttable portions (77) and its flanges (80) at least one partition (83).

30. A branching accessory according to any one of claims 26 to 29 characterised in that associated with the plate portion (74) is a complementary closure panel (30C) which is capable of being engaged into its groove (81) and which at least locally comprises a grid (R') of lines (32) of lower strength for permitting it to be divided into portions in respect of length and/or width.

31. A branching accessory according to claim 30 characterised in that the complementary closure panel (30C) comprises a stud (90) in projecting relationship.

32. A branching accessory according to either one of claims 30 and 31 characterised in that the complementary closure panel (30C) comprises in projecting relationship and parallel to its lateral edges (88) and at a spacing from both thereof two flanges (92) which define a groove (94) between them.
